# EUROPÄISCHE PATENTANMELDUNG

(11) **EP 0 791 900 A2**
(43) Veröffentlichungstag der Anmeldung: **27.08.1997**
(21) Anmeldenummer: 97102955.8
(22) Anmeldetag: 24.02.1997
(51) Int. Cl.: G07F 1/06, G07F 7/06

(54) **Sprechendes Pfand oder Pfandschloss**

(30) Priorität: 23.02.1996 DE 19606660
(71) Anmelder: Mercovend Münzpfand-Automaten GmbH, 74321 Bietigheim-Bissingen (DE)
(72) Erfinder: Merchel, Horst, 74321 Bietigheim-Bissingen (DE)
(74) Vertreter: COHAUSZ HASE DAWIDOWICZ & PARTNER

(57) **Zusammenfassung**

Pfandschloß 4 für lösbar aneinander zu befestigende Teile 1 wie Einkaufswagen oder Gepäckwagen, das ein Gehäuse 21 mit einer Öffnung 7,17 aufweist, in die ein Pfand 9,16 einsteckbar ist, um die Teile 1 voneinander zu lösen, wobei das Pfand oder das Pfandschloß ein "sprechendes" Pfand oder Pfandschloß ist.

## Beschreibung

Die Erfindung betrifft ein Pfandschloß für lösbar aneinander zu befestigende Teile wie Einkaufswagen oder Gepäckwagen, das ein Gehäuse mit einer Öffnung aufweist, in die ein Pfand einsteckbar ist, um die Teile voneinander zu lösen.

Es ist bekannt, insbesondere Einkaufs- oder Gepäckwagen mit einem Pfandschloß zu versehen, das beim Einstecken eines Pfandes in Form einer Münze, einer Karte oder eines Schlüssels ein meist kettenförmiges Verbindungsteil zu einem anderen Wagen freigibt, so daß der Wagen benutzt werden kann. Sobald er wieder an seine Basisstation zurück gebracht und über das Verbindungsteil an einen anderen Wagen gekoppelt ist, wird das Pfand freigegeben.

Derartige Pfandschlösser werden vom Benutzer eines Wagens insbesondere vom Kunden eines Supermarktes oft als Schikane oder Gängelung angesehen. Gerade wenn in das Pfandschloß bares Geld eingelegt werden muß reagieren viele Kunden mit Ablehnung gegenüber dieser vermeintlichen Ausgabe, die sie schon vor dem Einkauf leisten müssen.

Aufgabe der Erfindung ist es, ein Pfandschloß zu schaffen, das beim Benutzer die Abneigung mindert, ein Pfand abzugeben, und das sich zudem in die Werbestrategie eines Supermarktes einbeziehen läßt und dabei zur Stärkung der Bindung des Kunden an einen Supermarkt beiträgt.

Die Aufgabe wird erfindungsgemäß durch Pfandschlösser nach den Ansprüchen 1 oder 10 gelöst.

Vorteilhafte Ausführungsformen der erfindungsgemäßen Pfandschlösser sind in den jeweiligen Unteransprüchen aufgeführt.

Wesentlicher Vorteil des erfindungsgemäßen "sprechenden" Pfandschlosses ist zunächst, daß der Benutzer des Wagens sofort eine Gegenleistung für sein Pfand bekommt, sobald er dieses abgibt. Diese Gegenleistung kann eine Lautfolge insbesondere ein Text wie ein schlichtes "Dankeschön" oder eine einfache Begrüßung oder eine Tonfolge in Form einer angenehmen Melodie sein. Der einzelne Kunde erhält durch diese Aufmerksamkeit das Gefühl im Supermarkt wahrgenommen und empfangen worden zu sein.

In einer besonderen ersten Ausführungsform der Erfindung geht die sprechende Funktion von dem Pfand aus. Dazu weist das Pfand oder eine mit dem Pfand verbundene Vorrichtung insbesondere das Pfandschloß eine Schallquelle insbesondere einen Lautsprecher auf. Über diesen wird entweder die auf dem Pfand direkt gespeicherte Information verlautbar oder es werden von dem Pfand, das die Funktion eines Empfängers hat, Signale von einer entfernten Quelle aufgenommen und dadurch der Lautsprecher zur Abgabe von Lauten oder Tönen angeregt.

Das Pfand kann eine Karte, eine münzähnliche Scheibe, ein Stift oder ein Schlüssel sein. Damit das Pfand unabhängig "sprechen" kann ist es vorteilhaft den Lautsprecher, der insbesondere ein sehr kleiner und flacher Piezo-Lautsprecher sein kann, im oder am Pfand anzubringen. Über den Lautsprecher wird gesprochener Text mit Information verlautbar. In einer besonderen Ausführungsform ist der Text in einem Speicher niedergelegt, wobei der Speicher als Magnetstreifen auf dem Pfand ausgebildet sein kann, der den Text analog oder digital speichert. In einer anderen Ausführungsform ist der Speicher ein auf dem Pfand angebrachter Mikrochip, in dem die Information digital niedergelegt wird. Der gespeicherte Text kann über auslösende Signale, beispielsweise von Ultraschall- oder Infrarotsendern, die im Supermarkt verteilt sind, abgerufen werden. Über derartige Sender kann in einer anderen Ausführungsform des Pfandschlosses der Speicher mit einem anderen Text beschrieben werden. Statt einer solchen Modifikation des Textes kann in einfacherer Ausführungsform der Speicher ausgetauscht, und damit die Information aktualisiert werden. Der Austausch kann mittels eines aufsetzbaren Chip oder eines einschiebbaren auf einen Träger aufgebrachten Magnetstreifen geschehen.

Wie dargestellt kann das Pfand als Empfänger fungieren. D.h. in oder an dem Pfand ist ein Empfangsteil angebracht, das Signale von einem externen Sender empfängt. Die Verstärkungselektronik und der Lautsprecher sind vorteilhafterweise ebenfalls auf dem Pfand angebracht, so daß empfangener Text sofort hörbar ist. In dieser Ausführungsform ist es möglich, das Pfand wie ein Radio zu benutzen, über das vom Supermarkt gesendete Informationen hörbar werden.

In einer besonderen zweiten Ausführungsform der Erfindung bewirkt das Einstecken des Pfandes, das eine gewöhnliche Münze sein kann, daß über die Schallquelle, beispielsweise über einen Lautsprecher ein Text oder eine Melodie vernehmbar ist. Im einfachsten Falle kann das Einstecken eines Pfandes über elektromagnetische Impulse die Elektronik eines Bandgerätes, das sich in der Nähe der Basisstation des Wagens befindet, zur Wiedergabe des Textes oder der Melodie durch einen ebenfalls in der Nähe der Basisstation befindlichen Lautsprechers anregen. Als Pfand können auch eine Karte, eine münzähnliche Scheibe, ein Stift oder ein Schlüssel dienen.

In einer besonderen Ausführungsform ist der Lautsprecher am Wagen oder am Pfandschloß angebracht, so daß die Ansage individuell an den Benutzer gerichtet ist. Der Text ist vorteilhafterweise in einem elektronischen Speichermedium insbesondere einem Magnetstreifen oder einem Mikrochip niedergelegt, das sich im oder am Pfandschloß bzw. in oder am Pfand befindet. Der Text enthält in einer besonderen Ausführungsform Informationen wie spezielle Einkaufshilfen, die kundenspezifisch sein können. Dabei ist es vorteilhaft, wenn das Pfand individuell an den Kunden verteilt wird. So ist es möglich, zwischen einem Junggesellen und einer Hausfrau, die zweifellos andere Ansprüche an die Beratung stellt, zu unterscheiden. Der Text kann dabei auf Sonderangebote hinweisen, oder allgemein als Werbeträger benutzt werden.

Wie in der ersten Ausführungsform der Erfindung ist es auch hier möglich, durch individuell verteilte Pfänder den Kunden in seiner ihm eigenen Sprache anzureden, wenn sich der Text verschiedensprachig in dem Speicher befindet. In einer weiteren Ausführungsform kann der Text im Vorbeigehen an den Waren aufgerufen werden, wenn an den Regalen Sender insbesondere Ultraschall- oder Infrarotsender angebracht sind, die mit entsprechenden Empfängern in den Pfandschlössern wechselwirken. Es ist ebenfalls möglich, den Text in den Sendeeinheiten zu speichern und an einen Sprachgenerator, der im Pfandschloß angebracht ist, zu übertragen.

Wenn der Lautsprecher im Pfandschloß angebracht ist, so ist es vorteilhaft auch die Verstärkungselektronik, welche die Aufbereitung des Textes zwischen dem Speicher bzw. dem Sprachgenerator und dem Lautsprecher vornimmt ebenfalls in dem Pfandschloß zu integrieren. Die Stromversorgung kann von Akkus bewerkstelligt werden, die sich im Pfandschloß befinden und die von einer Spannungsquelle an der Basisstation über die Verbindungsglieder von Wagen zu Wagen aufgeladen werden.

Ist der Text in einem im Pfandschloß befindlichen Speicher gespeichert, so ist es vorteilhaft, die Elektronik derart auszulegen, daß der Text über eine zentrale Einrichtung insbesondere in Form eines Senders veränderbar ist. So kann der Text jederzeit aktualisiert werden. Bei einer anderen Ausführungsform kann der Speicher mit einfachen Handgriffen ausgetauscht werden, so daß die Speicher in einer Zentrale besprochen und dann in den Pfandschlössern ausgetauscht werden.

Bei einer anderen vorteilhaften Ausführungsform ist der Speicher im Pfand insbesondere auf einer Pfandkarte bzw. in einem Pfandschlüssel angebracht. In diesem Fall ist es möglich, den Text auf die Bedürfnisse des einzelnen Kunden auszurichten. So kann beispielsweise das Einkaufsverhalten des Kunden in seinem individuellen Speicher festgehalten und die Beratung kundenspezifisch ausgerichtet werden. Das Einkaufsverhalten wird beispielsweise anhand elektromagnetischer Impulse, die von Sendern an Regalen ausgehen, von einer Empfangseinheit im Pfandschloß registriert und auf den Speicher geschrieben. Stellt sich über eine gewisse Zeit heraus, daß der Kunde eine spezielle Ware bevorzugt, so wird er in Zukunft auf den Lagerplatz oder den Sonderpreis dieser Ware gesondert hingewiesen sobald er seine Pfandkarte in die Öffnung im Schloß steckt. Bei diesei Pfandkarte handelt es sich also um ein "hörendes" und ein sprechendes "Pfand". Ein derart hörendes

Pfand kann auch in der ersten Ausführungsform der Erfindung verwendet werden.

Es ist sogar denkbar, daß der Kunde vor dem Einkauf oder nach dem Einstecken des Pfandes dessen Speicher mit seinen Wünschen bespricht und eine Spracherkennungselektronik im Pfandschloß den Speicherinhalt ausliest und dem Kunden die Information über die speziellen Waren über einen Sprachgenerator, der dich im Gehäuse befindet, zurückgibt. Das Besprechen des Speichers geschieht vorteilhafterweise über ein Mikrophon, das in das Gehäuse eingebracht ist.

Ein Ausführungsbeispiel des Pfandschlosses ist in den Zeichnungen dargestellt und wird im folgenden näher beschrieben.

Es zeigen:
- **Fig. 1**: Einkaufswagen an einer Basisstation,
- **Fig. 2**: eine Pfandkarte mit Speicher,
- **Fig. 3**: ein Pfandschloß am Griff eines Einkaufswagens.

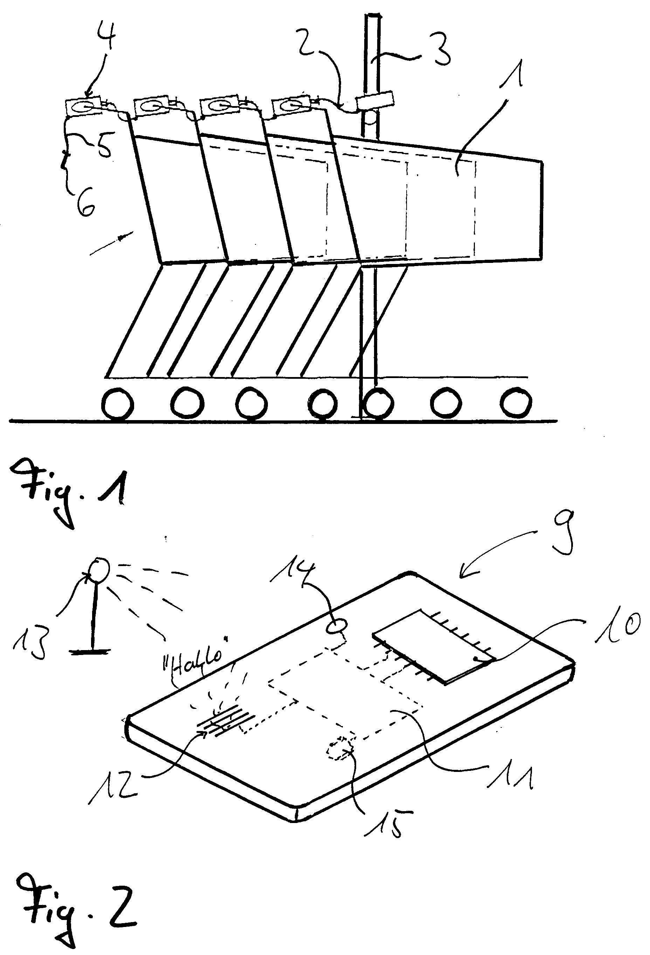

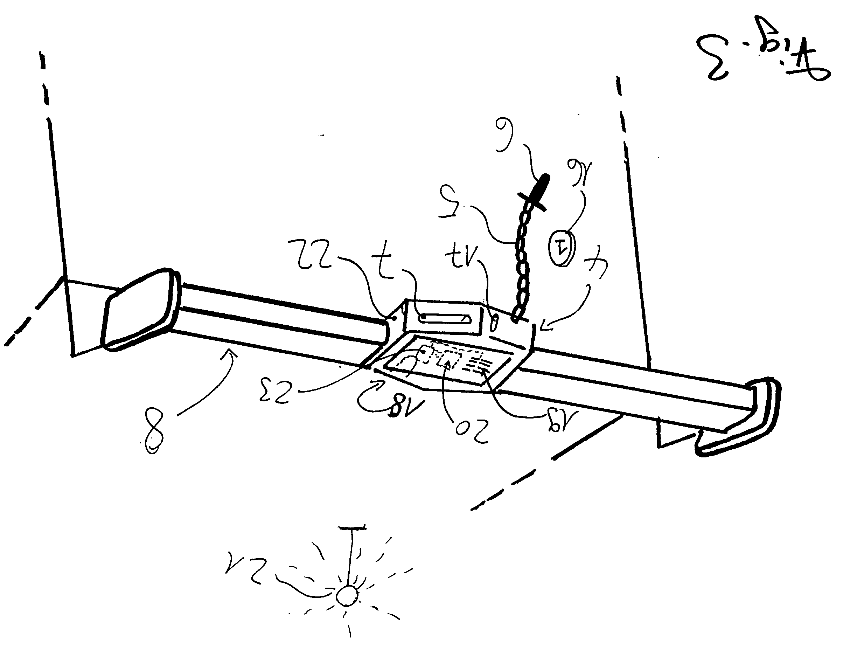

In Figur 1 sind ineinandergeschobene Einkaufswagen 1 im folgenden Wagen 1 genannt dargestellt, von denen der erste über ein Verbindungsglied insbesondere über eine Kette 2 an einer Basisstation 3 angeschlossen ist. Jeder der Wagen 1 ist mit einem Pfandschloß 4 am Griff 8 ausgestattet, an dem eine Kette 5 mit einem Steckteil 6 angebracht ist. In an sich bekannter Weise ist die Kette 2 des einen Wagens 1 in das Pfandschloß 4 des eingeschobenen Wagens 1 eingesteckt, so daß mehrere Wagen 1 gegeneinander gesichert sind. Beim Einschieben eines Pfandes in den Schlitz 7 (Figur 3) im Gehäuse 22 wird das Pfandschloß 4 aufgesperrt, so daß das Steckteil 6 des vorderen Wagens 1 herausspringt. Das Pfand verbleibt im Schlitz 7 bis der Wagen 1 wieder mit einem anderen gekoppelt wird.

Als Pfand wird in diesem besonderen Ausführungsbeispiel eine Karte 9 (Figur 2) verwendet, die etwa die Abmessungen einer Telefonkarte hat. Die in diesem Ausführungsbeispiel gezeigte Karte 9 ist mit einem digitalen Speichermedium in Form eines Mikrochip 10 versehen, der abnehmbar auf die Karte aufgesetzt ist. Auf dem Mikrochip ist Information in Form eines Textes niedergelegt. Außerdem ist die Karte 9 mit einer Empfangs- und Verstärkereinheit 11 ausgestattet die in Verbindung mit dem integrierten Lautsprecher 12 steht und in die Karte 9 eingelassen ist. Die Empfangs- und Verstärkereinheit 11 wird von einer Batterie 15 versorgt. Wird die Karte von einem externen Sender 13 angefunkt, so beginnt die Text Ansage. Außerdem verfügt diese besondere Karte 9 über einen Schalter 14 insbesondere einen Folienschalter, der betätigt wird, sobald die Karte 9 in den Schlitz 7 des Pfandschlosses 4 geschoben wird.

Bei dem in Figur 3 dargestellten Pfandschloß 4 handelt es sich um eine Ausführungsform, die sowohl mit einer Karte 9 als auch mit einer herkömmlichen Münze 16 ausgelöst werden kann. Dazu wird die Münze 16 in den Schlitz 17 geschoben und verbleibt darin bis zum Einstecken eines Steckteiles 6 in die Öffnung 18. Das Eistecken eines Pfandes löst im Pfandschloß eine Verstärkerelektronik 23 aus, die mit der im Zusammenhang mit der Karte nach Figur 2 dargestellten Elektronik vergleichbar ist. Die Information, d.h. der Werbetext oder die Einkaufshilfe ertönt aus dem Lautsprecher 19 am Pfandschloß. Der Speicher 20 befindet sich im Pfandschloß 4 und kann über einen externen Sender 21 mit Text belegt werden.

## Patentansprüche

1. Pfandschloß (4) für lösbar aneinander zu befestigende Teile (1) wie Einkaufswagen oder Gepäckwagen, das ein Gehäuse (21) mit einer Öffnung (7,17) aufweist, in die ein Pfand (9,16) einsteckbar ist, um die Teile (1) voneinander zu lösen,
**dadurch gekennzeichnet,** daß das Pfand oder eine mit dem Pfand (9,16) verbundene Vorrichtung insbesondere das Pfandschloß (4) eine Schallquelle (12,19) aufweist, die durch auf dem Pfand (9,16) gespeicherte Information oder von dem Pfand (9,16) empfangene Signale zur Abgabe von Lauten/Tönen anregbar ist.

2. Pfandschloß nach Anspruch 1 ,
**dadurch gekennzeichnet,** daß das Pfand eine Karte (9), eine münzähnliche Scheibe, ein Stift oder ein Schlüssel ist.

3. Pfandschloß nach Anspruch 1 oder 2,
**dadurch gekennzeichnet,** daß die Schallquelle ein Lautsprecher (12) ist, der im oder am Pfand (9) angebracht ist.

4. Pfandschloß nach einem der vorherigen Ansprüche,
**dadurch gekennzeichnet,** daß die Laute/Töne einen gesprochene Text bilden.

5. Pfandschloß nach einem der vorherigen Ansprüche,
**dadurch gekennzeichnet,** daß der gesprochene Text in einem Speicher (10) insbesondere einem Magnetstreifen oder einem digitalen Chip auf dem Pfand (9) gespeichert ist.

6. Pfandschloß nach einem der vorherigen Ansprüche,
**dadurch gekennzeichnet,** daß der Text über einen Sender (13) insbesondere einen Infrarot- oder Ultraschallsender abrufbar ist.

7. Pfandschloß nach einem der vorherigen Ansprüche,
**dadurch gekennzeichnet,** daß der Text von einem Sender (13) gesendet und von einem Empfänger (11) auf dem Pfand empfangen wird.

8. Pfandschloß nach einem der vorherigen Ansprüche,
**dadurch gekennzeichnet,** daß der Speicher (10) über einen Sender (11) beschreibbar ist.

9. Pfandschloß nach einem der vorherigen Ansprüche,
**dadurch gekennzeichnet,** daß der Speicher (10) auswechselbar ist.

10. Pfandschloß (4) für lösbar aneinander zu befestigende Teile (1) wie Einkaufswagen oder Gepäckwagen, das ein Gehäuse (21) mit einer Öffnung (7,17) aufweist, in die ein Pfand (9,16) einsteckbar ist, um die Teile (1) voneinander zu lösen,
**dadurch gekennzeichnet,** daß das Einstecken des Pfandes (9,16) eine Schallquelle (19) zur Abgabe von Lauten/Tönen erregt.

11. Pfandschloß nach Anspruch 10,
**dadurch gekennzeichnet,** daß die Laute/Töne einen gesprochene Text bilden.

12. Pfandschloß nach Anspruch 10 oder 11,
**dadurch gekennzeichnet,** die Schallquelle ein Lautsprecher (19) ist, der im bzw. am Gehäuse (22) oder im bzw. am Pfand (9) angebracht ist.

13. Pfandschloß nach einem der Ansprüche 10 bis 12,
**dadurch gekennzeichnet,** daß das Pfand eine Münze (16), eine Karte (9), eine münzähnliche Scheibe, ein Stift oder ein Schlüssel ist.

14. Pfandschloß nach einem der Ansprüche 10 bis 13,
**dadurch gekennzeichnet,** daß der gesprochene Text in einem Speicher (20) insbesondere einem Magnetstreifen oder einem digitalen Chip gespeichert ist.

15. Pfandschloß nach einem der Ansprüche 10 bis 14,
**dadurch gekennzeichnet,** daß der Speicher (20) im Gehäuse (22) angeordnet und über eine Verstärkerelektronik (23) mit dem Lautsprecher (19) verbunden ist.

16. Pfandschloß nach einem der Ansprüche 10 bis 15,
**dadurch gekennzeichnet,** daß die Verstärkerelektronik (23) über Akkus mit Strom versorgt wird, die über Verbindungsglieder (5) zwischen den Wagen aufgeladen werden.

17. Pfandschloß nach einem der Ansprüche 10 bis 16,
**dadurch gekennzeichnet,** daß im Speicher (20) verschiedene oder verschiedensprachige Texte gepeichert sind, die je nach Art des Pfandes aufgerufen werden.

18. Pfandschloß nach einem der Ansprüche 10 bis 17,
**dadurch gekennzeichnet,** daß der Text im Speicher (20) über einen Sender (21) veränderbar ist.

19. Pfandschloß nach einem der Ansprüche 10 bis 18,
**dadurch gekennzeichnet,** daß der Text im Speicher (20) über einen Sender (21) insbesondere einen Ultraschall- oder Infrarotsender abrufbar ist, der sich am Warenregal befindet.

20. Pfandschloß nach einem der Ansprüche 10 bis 19,
**dadurch gekennzeichnet,** daß der Speicher (20) auswechselbar ist.

21. Pfandschloß nach einem der Ansprüche 10 bis 20
**dadurch gekennzeichnet,** daß der Speicher (20) über Sender(21), die insbesondere an den Warenregalen angebracht sind, beschreibbar ist.

22. Pfandschloß nach einem der Ansprüche 10 bis 21,
**dadurch gekennzeichnet,** daß der Speicher (29) über ein Mikrophon vom Kunden beschreibbar ist.

23. Pfandschloß nach einem der Ansprüche 10 bis 22,
**dadurch gekennzeichnet,** daß sich im Gehäuse (22) ein Sprachgenerator befindet.

24. Pfandschloß nach einem der Ansprüche 10 bis 23,
**dadurch gekennzeichnet,** daß sich im Gehäuse (22) eine Spracherkennungselektronik befindet.
